# EUROPEAN PATENT SPECIFICATION

(11) **EP 4 274 978 B1**
(45) Date of publication and mention of the grant of the patent: **11.12.2024**
(21) Application number: 21702754.9
(22) Date of filing: 06.01.2021
(51) Int. Cl.: F16L 3/223, F16L 3/237, F16L 47/02, H02G 3/32, F16L 3/12, F16L 3/13

(54) **A RETAINING BRACKET FOR HOLDING CONDUITS**
HALTEKLAMMER ZUM HALTEN VON LEITUNGEN
SUPPORT DE RETENUE POUR MAINTIEN DE CONDUITS

(43) Date of publication of application: 15.11.2023
(73) Proprietor: BOREAS GROUP PLASTIK SANAYI VE TICARET ANONIM SIRKETI, Istanbul (TR)
(72) Inventor: ÇELIKKOL, Emre, Kartal/Istanbul (TR); BOZKURTLU, Ali Murat, Göztepe, Istanbul (TR); ALBERT, Andreas, 69226 Nussloch (DE); NEUMANN, Stefan, 38446 Wolfsburg (DE)
(74) Representative: Yavuzcan, Alev
(86) International application number: PCT/TR2021/050007
(87) International publication number: WO 2022/150021

(56) References cited:
- EP-A1- 0 230 553
- EP-A1- 3 575 655
- CN-A- 111 998 135
- FR-A1- 2 990 008
- US-A1- 2017 184 223
- US-A1- 2017 227 141
- US-A1- 2021 197 786

## Description

This invention relates to a retaining bracket to prevent lateral and transverse movement of conduits such as electrical wiring and fluid piping.

The conduits in the devices where water, oil, fuel, gas and similar fluids are used are produced from plastic, metal, ceramic and similar materials in various diameters and sizes according to the area of use. Conduits are fixed to rigid structures such as floor, ceiling, and side walls and to each other so that they can function without being affected by external factors. In addition, both sound and vibration occur in conduits through which fluids pass. In the state of the art, the retaining brackets are used to perform the fastening or fixing process. One part of the retaining bracket is attached to the conduit so that it partially or completely encloses the conduit, and the other part is attached to the place where the retaining bracket will be fixed.

In the state of the art, retaining brackets, which are used especially for fixing conduits through which fluid flows, are produced from the same material as the conduit and are fixed on the conduit by ultrasonic welding method after being attached to the conduit. In this embodiment, which is in the state of the art, ultrasonic welding process is applied along the contact surfaces of the conduit and the holding part of the retaining bracket. In this case, in case of a break down, it is not possible to separate the conduit from the retaining bracket without damaging the conduit partially or completely.

In the state of the art United States of America Patent Application No US2010243824, a retaining bracket for holding conduits may employ a first half or stationary portion defining a semi-circular first conduit holding portion and a semi-circular second conduit holding portion. A second half or movable portion may be foldable onto the stationary portion such that a first arcuate groove and a second arcuate groove of the movable portion match the first and second conduit holding portions, respectively, to accommodate the cylindrical conduits.

In the state of the art German Patent Application No DE4141689, the fixing unit has fuel lines attached to a lightweight sheet-metal body panel in an automobile, using a holder which is welded to the body panel, into which a plastics housing is clipped. The housing has an opening for a vent line and receives a vibration clamping element with openings for the fuel lines.

In the state of the art EP application No. 3 575 655 A1 (TI Automotive FuldaBrueck GmbH) a retaining bracket comprising at least one conduit holding part which has an opening for receiving at least one conduit, the retaining bracket comprising at least open slot on the conduit part, at least one insert placed into each slot, said insert being weldable on the outer surface of the conduit to assure the fixing of the retaining bracket on the conduits. However, this reference does not disclose that a bottom surface of the insert is serrated and that the retaining bracket comprises two parallel conduit holding parts.

The aim of the present invention is the realization of a retaining bracket to provide correct fixing of the retaining bracket on the conduits and to prevent lateral and transverse movement of conduits such as electrical wiring and fluid piping. The retaining bracket realized to attain the aim of the present invention is defined in claim 1. Preferred embodiments are detailed in the dependent claims. The retaining bracket comprises at least one conduit holding part (2) which has an opening (5) for receiving at least one conduit (6) made from a material,
- at least one slot (3) on the conduit holding part (2),
- at least one insert (4) placed into each slot (3),

said insert (4) being weldable on the outer surface of the conduit (6) to assure the fixing of the retaining bracket (1) on the conduit (6), the insert (4) being from the same material as the material of the conduit (6),
the material of the conduit holding part (2) being different from the material of the insert (4) and the conduit (6),
wherein the bottom surface of the insert (4) is serrated such that the insert (4) has a good grip on the outer surface of the conduit (6) when the conduit (6) is received in the opening (5),
wherein the retaining bracket (1) comprises two parallel conduit holding parts (2) for holding two conduits (6).

For the retaining bracket of the present invention, the material of the conduits and the conduit holding part are different. The conduit and the insert of the same material is sufficient for the welding process. By this means, for example, the plastic conduit can be used easily with the metal conduit holding part of the retaining bracket or opposite. Also, with the present invention, the alignment of the retaining bracket on the conduit is provided during the fixing process. Thus, in case of a break down, it is possible to separate the conduit from the retaining bracket without significantly damaging the conduit.

In a preferred embodiment of the invention, the retaining bracket is made of plastic especially a hard and rigid plastic material.

In an embodiment of the invention, the conduit holding part is adapted to receive and hold especially tubular conduits suitable to carry fluids such as fuel, oil, water, gas or the like. In a prefer embodiment of the invention, the conduit holding part is formed of tight fit clips.

In an embodiment of the invention, the bottom surface of the insert is compatible with the outer surface of the conduit. Preferably, the bottom surface of the insert is concave. When the insert is placed into the slot, the entire bottom surface of the insert is in full contact with the outer surface of the conduit.

The retaining bracket comprises two parallel conduit holding parts for holding two conduits. In this embodiment conduit holding parts wrap the conduits from upper and the lateral sides and the openings through which the conduits enter are in the same direction. The slot is placed on top of the conduit holding parts. In the fixing process, first, the retaining bracket is mounted on the conduits such that the slot coincides with upper surface of the conduit which is placed into the conduit holding part. After the retaining bracket gets in line on the conduit, the insert is placed into the slot and the welding is applied on the insert and accordingly the insert is welded on the conduit. In this embodiment the conduit holding part is in reverse "U" form.

In a second embodiment of the invention, the conduit holding parts wrap the conduits from upper, bottom and one lateral side which is next to each the conduit holding part and the openings through which the conduits enter are sideways, in the opposite direction. The slot is placed top of the conduit holding parts. In the fixing process, first, the retaining bracket mounts on the conduits such that the slot coincides with upper surface of the conduit which is placed into the conduit holding part. After the retaining bracket gets in line on the conduit, the insert is placed into the slot and the welding is applied on the insert and the insert is welded on the conduit. In this embodiment the conduit holding part is in "C" form. Also, the mounting direction of the retaining bracket on the conduit is different from the welding direction of the insert. Thus, the retaining bracket does not separate on the conduit end of the welding process.

The drawings are not meant to delimit the scope of protection as identified in the claims nor should they be referred to alone in an effort to interpret the scope identified in the claims without recourse to the technical disclosure in the description of the present invention.
Figure 1 - is a perspective view of the retaining bracket before the fixing process.
Figure 2 - is a perspective view of the retaining bracket that mounts on the conduits.
Figure 3 - is a front view of the retaining bracket that mounts on the conduits.
Figure 4 - is a perspective view of the retaining bracket after the fixing process.
Figure 5 - is a sectional view of the retaining bracket and conduits after the fixing process.
Figure 6 - is a perspective view of the second embodiment of the retaining bracket before the fixing process.
Figure 7 - is the perspective view of the second embodiment of the retaining bracket that mounts on the conduits.
Figure 8 - is the front view of the second embodiment of the retaining bracket that mounts on the conduits.
Figure 9 - is the perspective view of the second embodiment of the retaining bracket after the fixing process.
Figure 10 - is the sectional view of the second embodiment of the retaining bracket and conduits after the fixing process.

The following numerals are assigned to different parts demonstrated in the drawings and referred to in the present detailed description of the invention:
1. Retaining bracket
2. Conduit holding part
3. Slot
4. Insert
5. Opening
6. Conduit

The retaining bracket (1) of the present invention comprises at least one conduit holding part (2) which has an opening (5) for receiving at least one conduit, at least one slot (3) on the conduit holding part and at least one insert (4) placed into each slot (3) and connected on the outer surface of the conduit during the fixing of the retaining bracket (1) on the conduits (6).

The material of the conduit (6) and the insert (4) are the same. The conduits (6) and the conduit holding part (2) are made of different material. The conduit (6) and the insert (4) of the same material is sufficient for the welding process. Also, with the present invention, the alignment of the retaining bracket (1) on the conduit (6) is provided during the fixing process.

In a preferred embodiment of the invention, the retaining bracket (1) and the insert (4) are made of plastic especially a hard and rigid plastic material.

In an embodiment of the invention, the conduit holding part (2) is adapted to receive and hold especially tubular conduits (6). In a preferred embodiment of the invention, the conduit holding part (2) is formed of tight fit clips.

In an embodiment of the invention, the bottom surface of the insert (4) is compatible with the outer surface of the conduit (6). Preferably, the bottom surface of the insert (4) is concave. When the insert (4) is placed into the slot (3), the entire bottom surface of the insert (4) is in full contact with the outer surface of the conduit (6) and further the insert (4) fits fully into the slot (3) and in this case does not form any protrusion on the top of the conduit holding part (2) when the fixing process is completed.

The bottom surface of the insert (4) is serrated. Accordingly, the insert (4) has a good grip on the outer surface of the conduit (6).

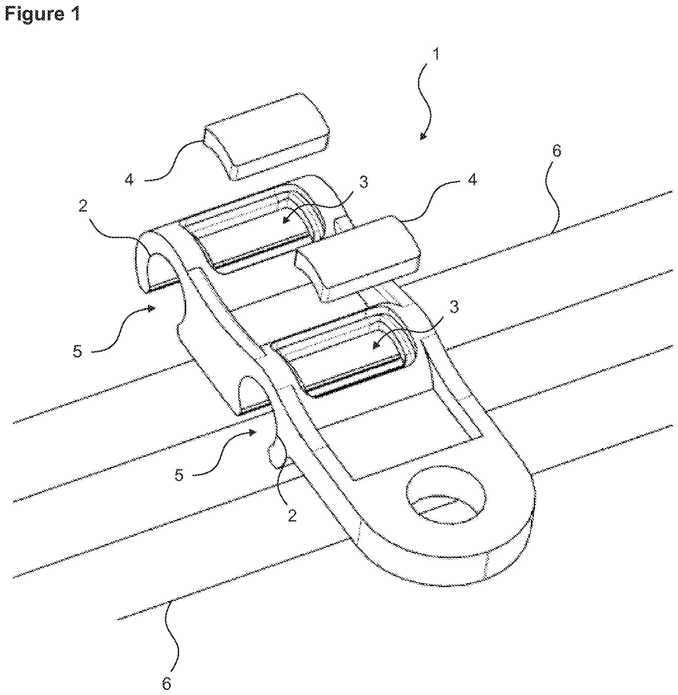

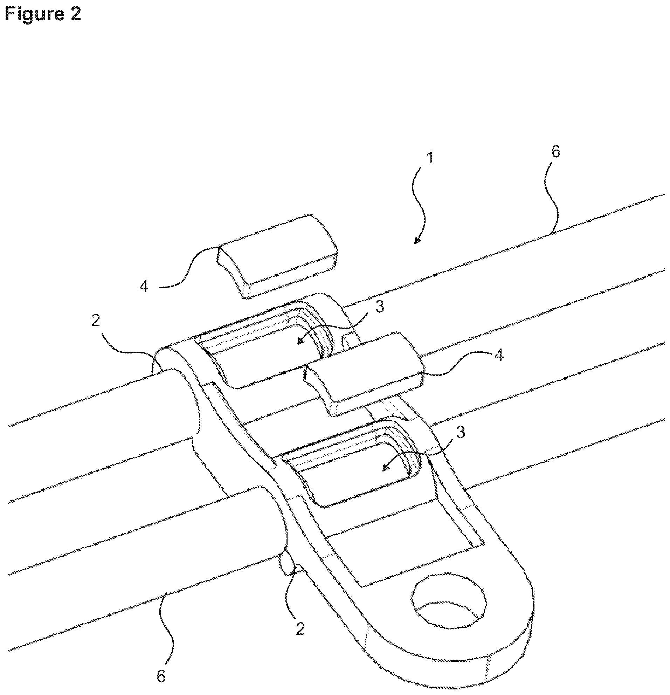

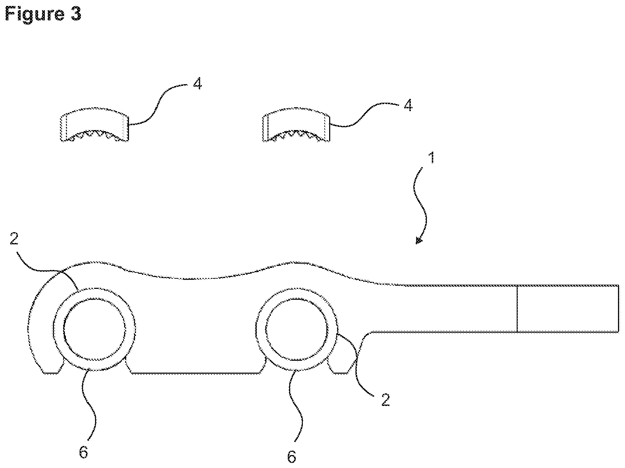

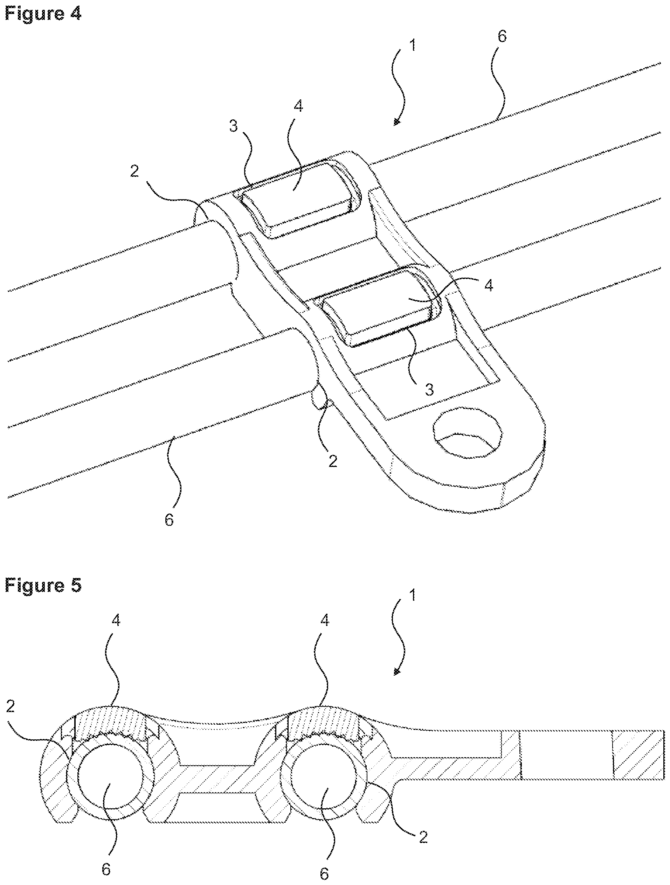

The retaining bracket (1) comprises two parallel conduit holding parts (2) for holding two conduits (6) . In this embodiment the conduit holding parts (2) wrap the conduits (6) from upper and the lateral sides and the openings (5) through which the conduits (6) enter in the same direction. The slot (3) is placed top of the conduit holding parts (2). In the fixing process, firstly, the retaining bracket (1) is mounted on the conduits (6) such that the slot (3) coincides with upper surface of the conduit (6) which is placed into the conduit holding part (2). After the retaining bracket (1) is placed on the conduit (6), the insert (4) is placed into the slot (3) and the welding is applied on the insert (4) and the insert (4) is welded on the conduit (6). In this embodiment the conduit holding part (2) is in reverse "U" form (Figure 1, Figure 2, Figure 3, Figure 4 and Figure 5).

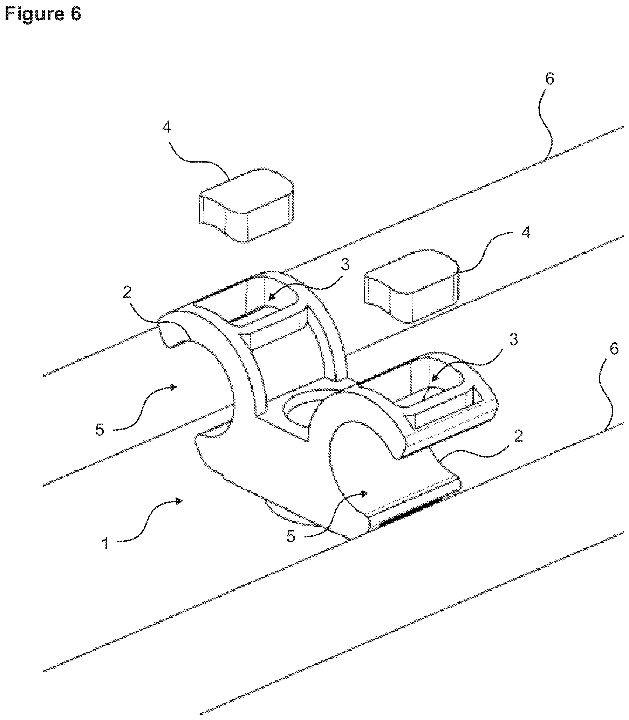

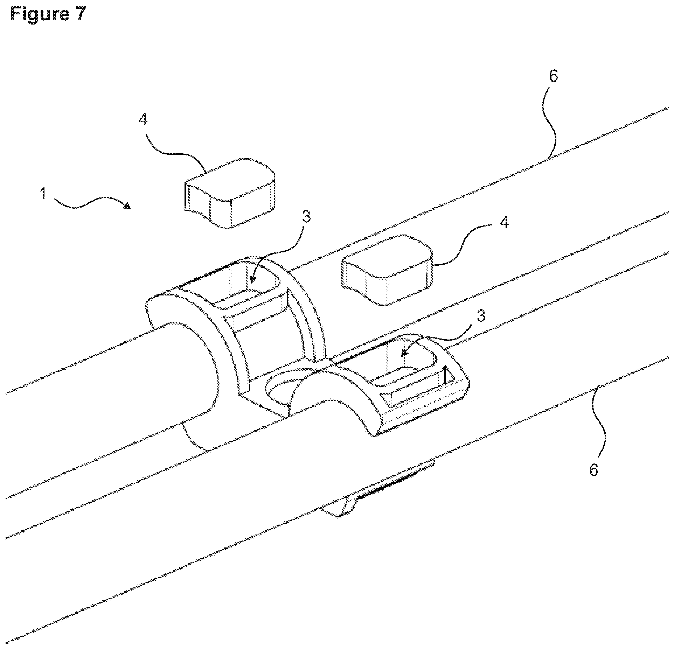

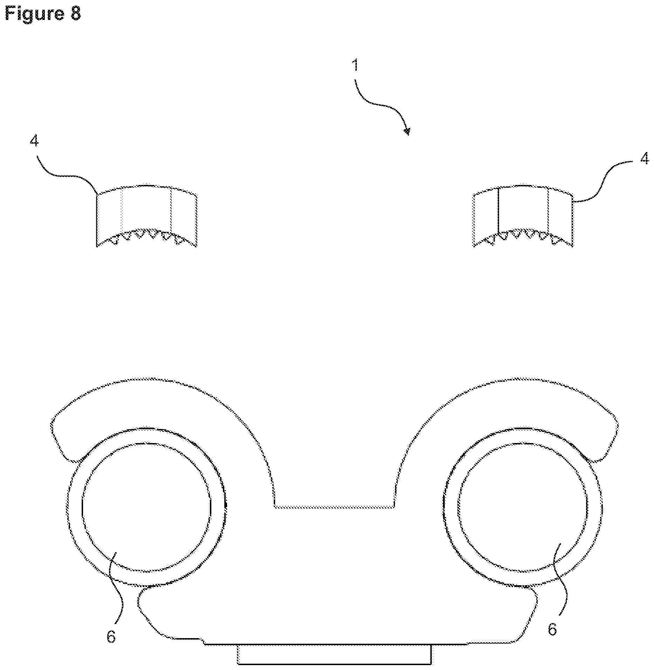

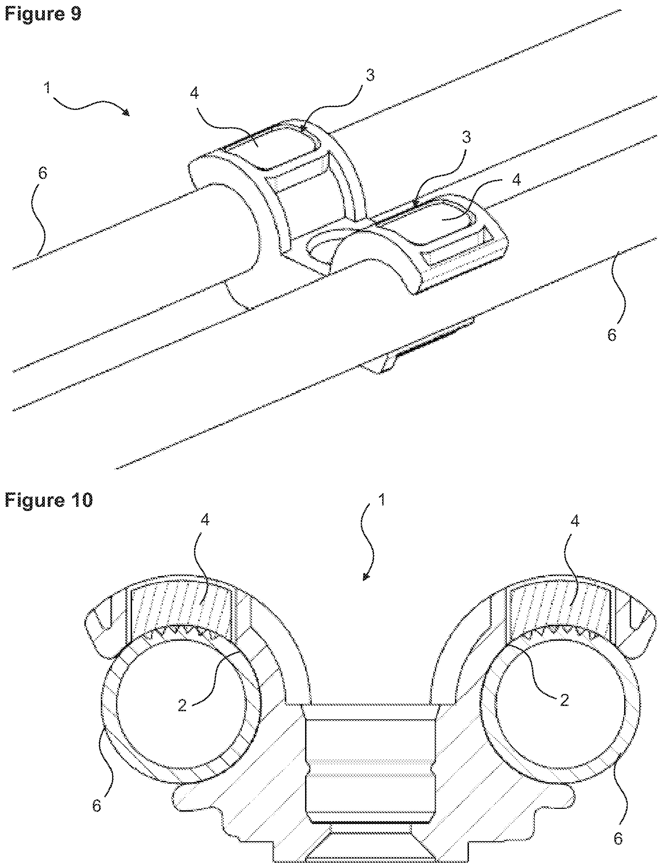

In the second embodiment of the invention, the conduit holding parts (2) wrap the conduits (6) from upper, bottom and one lateral side which is next to each the conduit holding parts (2) and the openings (4) through which the conduits (6) enter are facing sideways, in the opposite direction. The slot (3) is also on the top of the conduit holding parts (2). In the fixing process, firstly, the retaining bracket (1) is mounted on the conduits (6) such that the slot (3) coincides with upper surface of the conduit (6) which is placed into the conduit holding part (2). After the retaining bracket (1) is placed on the conduit (6), the insert (4) is placed into the slot (3) and the welding is applied on the insert (4) and the insert (4) is welded on the conduit (6). In this embodiment the conduit holding part (2) is in "C" form. Also, the mounting direction of the retaining bracket (1) on the conduit (6) is different from the welding direction of the insert (4). Thus, the retaining bracket (1) does not separate on the conduit (6) end of the welding process (Figure 6, Figure 7, Figure 8, Figure 9 and Figure 10).

In the present invention, the fixing method of fixing the retaining bracket comprises at least the steps of:
- mounting the retaining bracket (1) on the conduits (6),
- placing the retaining bracket (1) on the conduits (6),
- placing the insert (4) into the slot (3) and
- applying the welding on the insert (4).

In all the embodiments of the invention, the fixing method is welding especially ultrasonic welding.

## Claims

1. A retaining bracket (1) comprising
• at least one conduit holding part (2) which has an opening (5) for receiving at least one conduit (6) made from a material,
• at least one slot (3) on the conduit holding part (2),
• at least one insert (4) placed into each slot (3),
said insert (4) being weldable on the outer surface of the conduit (6) to assure the fixing of the retaining bracket (1) on the conduit (6), the insert (4) being from the same material as the material of the conduit (6),
the material of the conduit holding part (2) being different from the material of the insert (4) and the conduit (6),
**characterized in that**
the bottom surface of the insert (4) is serrated such that the insert (4) has a good grip on the outer surface of the conduit (6) when the conduit (6) is received in the opening (5), wherein the retaining bracket (1) comprises two parallel conduit holding parts (2) for holding two conduits (6).

2. The retaining bracket (1) of Claim 1, **characterized by** the retaining bracket (1) and the insert (4) made of plastic.

3. The retaining bracket (1) of Claim 2, **characterized by** the retaining bracket (1) and the insert (4) made of hard and rigid plastic material.

4. The retaining bracket (1) of Claim 1, **characterized in that** the conduit holding part (2) is formed of tight fit clips.

5. The retaining bracket (1) of Claim 1, **characterized in that** the conduit holding part (2) is in reverse "U" form.

6. The retaining bracket (1) of Claim 1, **characterized in that** the conduit holding part (2) is in "C" form.

7. A fixing method of fixing the retaining bracket (1) of any one of the preceding claims, comprising at least the steps of;
• mounting the retaining bracket (1) on the conduits (6),
• placing the retaining bracket (1) on the conduits (6),
• placing the insert (4) into the slot (3) and
• applying welding on the insert (4) to assure the fixing of the retaining bracket (1) on the conduits (6).

## Patentansprüche

1. Halterung (1), umfassend:
• wenigstens einen Leitungskanalhalteteil (2), der eine Öffnung (5) zum Aufnehmen wenigstens eines Leitungskanals (6) aufweist, der aus einem Material hergestellt ist,
• wenigstens einen Schlitz (3) an dem Leitungskanalhalteteil (2),
• wenigstens einen Einsatz (4), der in jedem Schlitz (3) angeordnet ist,
wobei der Einsatz (4) an die Außenfläche des Leitungskanals (6) schweißbar ist, um die Fixierung der Halterung (1) an dem Leitungskanal (6) zu gewährleisten, wobei der Einsatz (4) aus dem gleichen Material wie das Material des Leitungskanals (6) hergestellt ist,
wobei sich das Material des Leitungskanalhalteteils (2) von dem Material des Einsatzes (4) und des Leitungskanals (6) unterscheidet,
**dadurch gekennzeichnet, dass**
die Bodenfläche des Einsatzes (4)geriffelt ist, derart, dass der Einsatz (4) einen guten Griff an der Außenfläche des Leitungskanals (6) aufweist, wenn der Leitungskanal (6) in der Öffnung (5) aufgenommen ist,
wobei die Halterung (1) zwei parallele Leitungskanalhalteteile (2) zum Halten von zwei Leitungskanälen (6) umfasst.

2. Halterung (1) nach Anspruch 1, **dadurch gekennzeichnet, dass** die Halterung (1) und der Einsatz (4) aus Kunststoff hergestellt sind.

3. Halterung (1) nach Anspruch 2, **dadurch gekennzeichnet, dass** die Halterung (1) und der Einsatz (4) aus einem harten und starren Kunststoffmaterial hergestellt sind.

4. Halterung (1) nach Anspruch 1, **dadurch gekennzeichnet, dass** der Leitungskanalhalteteil (2) aus eng anliegenden Klemmen gebildet ist.

5. Halterung (1) nach Anspruch 1, **dadurch gekennzeichnet, dass** der Leitungskanalhalteteil (2) die Form eines umgekehrten "U" aufweist.

6. Halterung (1) nach Anspruch 1, **dadurch gekennzeichnet, dass** der Leitungskanalhalteteil (2) die Form eines "C" aufweist.

7. Fixierungsverfahren zum Fixieren der Halterung (1) nach einem der vorangehenden Ansprüche, wenigstens folgende Schritte umfassend:
• Anbringen der Halterung (1) an den Leitungskanälen (6),
• Anordnen der Halterung (1) an den Leitungskanälen (6),
• Anordnen des Einsatzes (4) in dem Schlitz (3) und
• Anwenden von Schweißen auf den Einsatz (4), um die Fixierung der Halterung (1) an den Leitungskanälen (6) zu gewährleisten.

## Revendications

1. Une équerre de retenue (1) comprenant
• au moins une pièce de maintien de conduit (2) qui présente une ouverture (5) pour recevoir au moins un conduit (6) produit en un matériau,
• au moins une fente (3) sur la pièce de maintien de conduit (2),
• au moins un insert (4) placé dans chaque fente (3),
ledit insert (4) pouvant être soudé sur la surface extérieure du conduit (6) pour assurer la fixation de la équerre de retenue (1) sur le conduit (6), l'insert (4) étant produit en le même matériau que le matériau du conduit (6),
le matériau de la pièce de maintien de conduit (2) étant différent du matériau de l'insert (4) et du conduit (6),
**caractérisée en ce que**
la surface inférieure de l'insert (4) est dentelée de telle sorte que l'insert (4) a une bonne prise sur la surface extérieure du conduit (6) lorsque le conduit (6) est reçu dans l'ouverture (5),
où l'équerre de retenue (1) comprend deux pièces de maintien de conduit (2) parallèles pour maintenir deux conduits (6).

2. Une équerre de retenue (1) selon la revendication 1, **caractérisée en ce que** l'équerre de retenue (1) et l'insert (4) sont produits en plastique.

3. Une équerre de retenue (1) selon la revendication 2, **caractérisée en ce que** l'équerre de retenue (1) et l'insert (4) sont produits en matière plastique dure et rigide.

4. Une équerre de retenue (1) selon la revendication 1, **caractérisée en ce que** la pièce de maintien de conduit (2) est formée de griffes à ajustement serré.

5. Une équerre de retenue (1) selon la revendication 1, **caractérisée en ce que** la pièce de maintien de conduit (2) est en forme de « U » inversé.

6. Une équerre de retenue (1) selon la revendication 1, **caractérisée en ce que** la pièce de maintien de conduit (2) est en forme de « C ».

7. Un procédé pour fixer l'équerre de retenue (1) selon l'une quelconque des revendications précédentes, comprenant au moins les étapes suivantes de:
• monter l'équerre de retenue (1) sur les conduits (6),
• placer l'équerre de retenue (1) sur les conduits (6),
• placer l'insert (4) dans la fente (3) et
• appliquer la soudure sur l'insert (4) pour assurer la fixation de l'équerre de retenue (1) sur les conduits (6).
